**Europäisches Patentamt**

(19) **European Patent Office**

**Office européen des brevets**

(11) Numéro de publication: **0 165 152**
A1

(12) **DEMANDE DE BREVET EUROPEEN**

(21) Numéro de dépôt: **85401006.3**

(22) Date de dépôt: **21.05.85**

(51) Int. Cl.⁴: **A 47 J 27/05**
**A 47 J 27/084, A 23 L 3/10**

(30) Priorité: **28.05.84 FR 8408349**

(43) Date de publication de la demande:
**18.12.85 Bulletin 85/51**

(84) Etats contractants désignés:
**AT BE CH DE FR GB IT LI LU NL SE**

(71) Demandeur: **Barillot, Joel**
**82 bis, avenue de Paris**
**F-78000 Versailles(FR)**

(72) Inventeur: **Barillot, Joel**
**82 bis, avenue de Paris**
**F-78000 Versailles(FR)**

(74) Mandataire: **Sauvage, Renée**
**CABINET SAUVAGE 100 bis, avenue de Saint-Mandé**
**F-75012 Paris(FR)**

(54) **Récipient et procédé de conditionnement et de stérilisation de préparations cuisinées avec séparation des composants et migration aromatique d'un compartiment vers l'autre.**

(57) Le récipient comporte au moins deux compartiments (1, 2) hermétiquement isolés du milieu extérieur et isolés l'un de l'autre par des moyens (3, 4) s'opposant au passage de liquide, mais permettant, au-delà d'un seuil de pression interne prédéterminé, le passage des gaz d'un compartiment à l'autre.

L'un des compartiments (1) renferme une première composition alimentaire développant des fumets et des arômes lors d'une opération de stérilisation et, l'autre (2), une, seconde composition alimentaire susceptible d'être parfumée par lesdits arômes et/ou par lesdits fumets, grâce à quoi, lors de la stérilisation, l'air chargé des fumets et des arômes de la première composition peut passer vers le compartiment (2) contenant la deuxième composition.

./...

FIG 1

Récipient et procédé de conditionnement et de stérilisation de préparations cuisinées avec séparation des composants et migration aromatique d'un compartiment vers l'autre.

La présente invention concerne un récipient à compartiments multiples pour le conditionnement et la conservation de produits alimentaires en vue de leur consommation différée, ledit récipient étant utilisé également pour la stérilisation des produits alimentaires qu'il renferme.

Dans l'industrie de la conserve alimentaire, les récipients de stérilisation sont utilisés pour faire subir à des denrées alimentaires, à l'abri de l'air, un traitement thermique destiné à détruire la flore microbienne, rendant ainsi les aliments propres à une longue conservation.

On connaît de nombreux récipients à usage de stérilisation ou de pasteurisation de denrées alimentaires :

. boîtes métalliques avec couvercle serti ;

. bocaux verre avec couvercle : articulé, vissé, serti, pincé ;

. barquettes plastique ou plastique-métal à couvercle thermo-scellé ;

. sachets plastique à fermeture thermo-scellée.

La quasi totalité de ces récipients, et notamment tous les bocaux en verre, sont à capacité unique.

Dans ce type de récipient, les divers composants constituant la préparation cuisinée sont mélangés pendant le traitement de stérilisation et jusqu'à la consommation. Cela entraîne :

. la limitation des possibilités de préparation aux seuls composants compatibles ;

. une modification de la texture des divers composants ;

. une uniformisation des saveurs entre viandes et garnitures ;

. une surcuisson du composant ayant la plus faible durée de stérilisation .

Ces divers inconvénients expliquent en fait la rareté

- 2 -

0165152

des véritables préparations cuisinées en capacité unique.

Certains récipients comportent deux ou plusieurs compartiments. Ce sont surtout des barquettes ou des sachets plastique utilisés pour des aliments préparés en pasteurisation et à faible durée de conservation. Dans ce type de récipient, les divers composants sont isolés dans des compartiments totalement étanches. Il s'agit donc, en fait, davantage de juxtapositions viandes + garnitures que de véritables préparations cuisinées en raison de l'absence d'échanges aromatiques entre les divers composants.

La présente invention a pour but de remédier à ces inconvénients et, à cet effet, elle propose un récipient permettant d'élaborer des préparations cuisinées complètes (viandes et garnitures), en utilisant la spéficité de chacun des éléments tout en ajoutant, par une migration aromatique d'un composant vers l'autre, le caractère de plat cuisiné de bonne qualité.

Plus précisément, le récipient selon l'invention comporte au moins deux compartiments hermétiquement isolés du milieu extérieur et isolés l'un de l'autre par des moyens s'opposant au passage de liquide d'un compartiment à l'autre, mais permettant, au-delà d'un seuil de pression interne prédéterminé, le passage des gaz d'un compartiment à l'autre.

Les compartiments sont adaptés à contenir, l'un, une première composition alimentaire développant des fumets et des arômes lors d'une opération de stérilisation et, l'autre, une seconde composition alimentaire susceptible d'être parfumée par lesdits arômes et/ou par lesdits fumets, grâce à quoi, lors de la stérilisation, le récipient permet à l'air chargé des fumets et des arômes de la première composition, de passer vers le deuxième compartiment contenant la deuxième composition.

Les avantages obtenus grâce à cette invention consistent essentiellement en ce que :

. les composants de nature différente sont stérilisés dans des ambiances qui leur sont propres, ce qui permet de leur conserver texture et goût spécifiques ;

. le composant ayant la plus longue durée de stérilisation peut être pré-stérilisé indépendamment, ce qui permet d'éviter la surcuisson de l'autre composant ;

. la migration aromatique qui s'exerce pendant la stérilisation apporte "le plus" nécessaire à toute préparation cuisinée de bonne qualité ;

. après stérilisation et osmose aromatique, les composants de nature différente sont conservés jusqu'à la consommation dans des ambiances séparées, ce qui évite la dégradation des saveurs constatée dans les capacités uniques ;

. une gamme étendue de nouvelles préparations peut être créée car il n'y a plus d'incompatibilités entre les composants.

Dans une forme d'exécution de l'invention, les deux compartiments sont appliqués ouverture contre ouverture, et ils sont hermétiquement isolés du milieu extérieur par un dispositif d'obturation commun et amovible, ledit dispositif d'obturation commun coopèrant avec le bord libre de l'ouverture de chacun des deux compartiments.

Avantageusement, les moyens permettant le passage des gaz sont des moyens à voie unique, grâce à quoi l'on peut obtenir une migration aromatique d'un compartiment choisi vers l'autre, et non une migration réciproque entre les deux compartiments.

Les moyens permettant le passage à voie unique des gaz, autrement dit de l'air chargé de fumets et d'arômes, sont constitués par une capsule reposant sur le bord libre du premier compartiment et maintenue en position par un organe d'appui, ladite capsule formant soupape pour l'échappement des fumets et arômes lorsque la pression dans le premier compartiment excède un seuil prédéterminé et ledit organe d'appui laisse libres des passages adaptés à permettre aux fumets et arômes ainsi issus du premier compartiment de pénétrer dans le second compartiment.

La capsule est maintenue en position par un appui exercé en son centre par l'organe d'appui et l'effet de soupape est obtenu par déformation de ladite capsule entraînant le soulèvement de sa périphérie et le décollement d'avec le bord libre du premier compartiment.

Pour une présentation optimale du plat cuisiné en vue de sa vente au consommateur, les deux compartiments sont de préférence en verre.

Cependant, si le plat cuisiné est destiné à la restauration, le récipient peut être réalisé en matière plastique (barquettes ou sachets subdivisés en compartiments horizontaux) auquel cas les moyens s'opposant au passage de liquide d'un compartiment à l'autre, mais permettant, au-delà d'un seuil de pression interne prédéterminé, le passage des gaz d'un compartiment à l'autre, sont constitués d'une zone de paroi en un matériau inerte, perméable aux gaz et imperméable aux liquides, tel que le polytétrafluoroéthylène.

Dans ce cas, le passage des gaz ne se fait pas à voie unique, mais bi-sens, d'un compartiment à l'autre et inversement.

Après la stérilisation, on peut isoler la zone de paroi en perméable aux gaz par thermo-scellement, mettant ainsi un terme à la communication entre les compartiments.

Quelle que soit la forme spécifique que revêt le récipient selon l'invention, on comprend qu'il est applicable au conditionnement, à la stérilisation et à la conservation de préparations cuisinées de longue conservation comportant plusieurs composants de nature différente dont le conditionnement, la stérilisation et la conservation dans un seul contenant altéreraient les qualités gustatives et la consistance desdits composants.

Ainsi, le récipient selon l'invention permet la mise en oeuvre d'un procédé d'élaboration de préparations cuisinées de longue conservation par :

- un conditionnement séparé des spécialités viandes ou poissons et des garnitures,

- 5 -

0165152

- une stérilisation séparée de ces mêmes composants,

- un transfert des arômes et des fumets de la spécialité dans les garnitures, et

- une conservation séparée des spécialités et garnitures jusqu'au moment de l'utilisation.

L'invention est décrite ci-après, en détail, par référence aux dessins annexés dans lesquels :

- la figure 1 montre, en coupe, une première forme d'exécution du récipient selon l'invention utilisant des capacités en verre et une capsule métallique, déjà commercialisées et couramment utilisées dans l'industrie de la conserve

- la figure 2 est une vue en plan de l'étrier de contrainte utilisé dans le récipient de la figure 1,

- la figure 3 montre, en coupe, une deuxième forme d'exécution du récipient selon l'invention utilisant des capacités en verre spécialement conçues à cet effet,

- la figure 4 représente, en coupe, un dispositif à membrane polytétrafluoroéthylène permettant la migration aromatique bi-sens, dans une troisième forme d'exécution, et

- la figure 5 est un graphique montrant les courbes de pression dans les compartiments en fonction de la température.

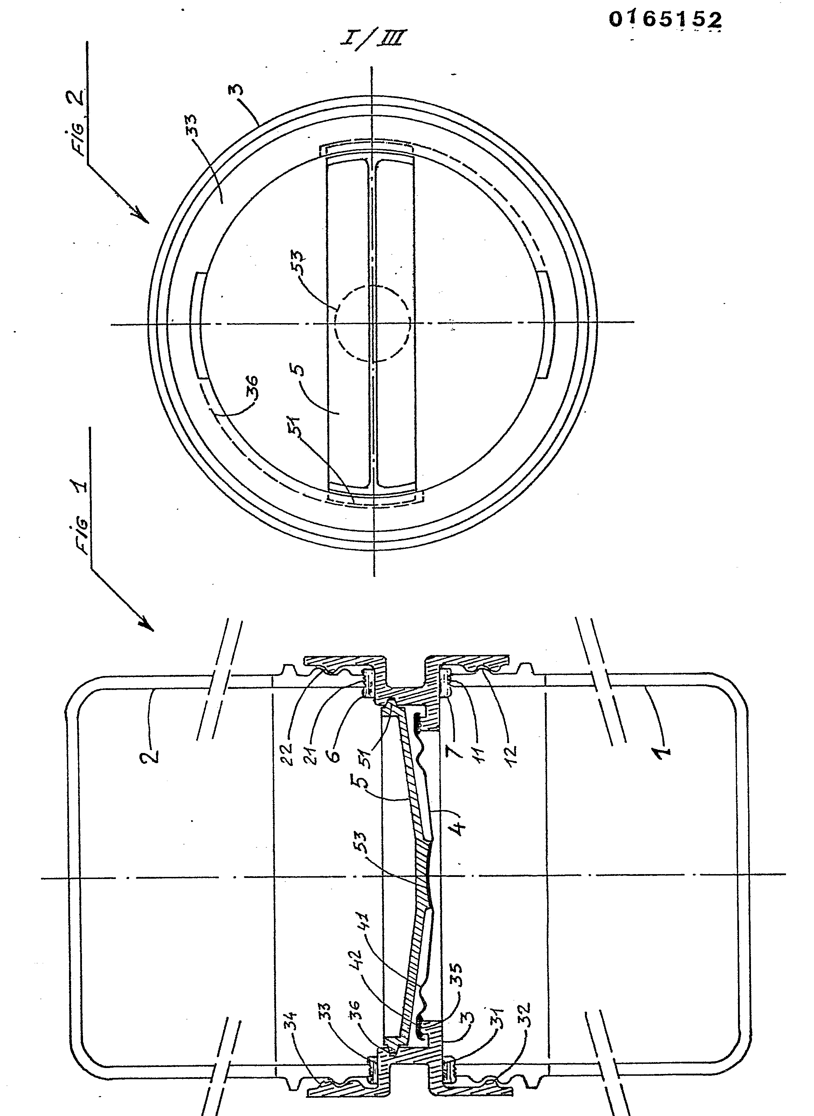

Si l'on se reporte aux figures 1 et 2, on voit que le récipient comporte un bocal inférieur 1 et un bocal supérieur 2.

Le bocal inférieur 1 qui doit contenir les viandes ou préparations "nobles" est un récipient en verre du commerce, comportant une portée striée 11 et un profil extérieur à visser 12.

Le bocal supérieur 2 qui doit contenir les garnitures est un récipient en verre de même type et comportant, lui aussi, une portée striée 21 et un profil extérieur à visser 22.

Les deux bocaux 1 et 2 sont reliés par une bague 3. Il s'agit d'une bague en matière plastique ayant les caractéristiques appropriées pour un usage alimentaire, et une bonne résistance mécanique aux températures de stérilisation. Elle

- 6 -

0165152

comporte :

- pour sa liaison avec le récipient 1.

 . un profil intérieur à visser 32 adapté à coopérer avec le profil 12

 . une portée d'étanchéité 31 adaptée à coopérer avec la portée 11

- pour sa liaison avec le récipient 2

 . un profil intérieur à visser 34 adapté à coopérer avec le profil 22

 . une portée d'étanchéité 33 adaptée à coopérer avec la portée 21

- pour la fixation d'une capsule 4 que l'on décrira ci-après

 . une portée striée 35

- pour la fixation d'un étrier de contrainte 5 que l'on décrira ci-après

 . une gorge de profil approprié 36.

La capsule soupape 4 est métallique avec un revêtement "alimentaire". Elle comporte :

 . un profil 41 lui donnant l'élasticité nécessaire à sa fonction de soupape.

 . une portée périphérique 42 avec un joint adhérent polymérisé pour assurer l'étanchéité avec la portée 35 de la bague 3.

L'étrier de contrainte 5 est en plastique de même nature que celui de la bague 3. Il comporte :

 . une portée à profil approprié 53 destinée à la retenue point fixe du centre de la capsule métallique 4

 . une saillie extérieure 51 pour la fixation de l'étrier dans la gorge 36 de la bague.

Des joints 6 et 7 sont interposés entre les bocaux 1 et 2, et la bague 3 pour assurer l'étanchéité des compartiments 1 et 2 avec l'extérieur. Ces joints sont en caoutchouc de qualité adaptée aux conditions de la stérilisation.

FONCTIONNEMENT DU DISPOSITIF

La capsule métallique 4, maintenue en son centre par l'étrier de contrainte 5, se déforme sur sa périphérie sous l'action d'une pression comprise entre $2.10^4$ et $3.10^4$ Pa. Il

faut donc créer dans les deux bocaux 1 et 2 les conditions nécessaires à l'évolution de pressions différentes dont le delta positif de 1 vers 2 soit supérieur à la résistance de la capsule 4.

La pression à l'intérieur d'un récipient soumis à stérilisation dépend de plusieurs paramètres :

- vide initial à la fermeture
- température du contenu à la fermeture
- température de stérilisation
- dégarnissage, c'est-à-dire pourcentage d'espace libre entre la phase liquide ou solide et l'organe de fermeture.

Les courbes représentées à la figure 5 montrent l'évolution des pressions théoriques relatives dans les compartiments 1 et 2 pour le choix des paramètres suivants :

- Compartiment 1 (courbe supérieure trait plein)
  - vide initial $3.10^4$ Pa (relatif)
  - température empotage 20°C
  - température stérilisation 115°C
  - dégarnissage 7 %
- Compartiment 2 (courbe inférieure trait plein)
  - vide initial $3.10^4$ Pa (relatif)
  - température empotage 20°C
  - température stérilisation 115°C
  - dégarnissage 12 %

Dans les conditions définies ci-dessus, les courbes montrent que le delta positif des pressions dans le récipient 1 devient supérieur à la résistance de la capsule 4 aux environs de 80°C. C'est à ce moment que la capsule 4, maintenue point fixe en son centre, se lève de sa portée périphérique et laisse échapper des arômes de cuisson ; la capsule 4 reprend sa position initiale dès que la différence de pression entre les deux compartiments atteint de nouveau la valeur correspondant à la résistance de la capsule 4.

Cette opération d'échappement des arômes s'effectue ainsi par cycles successifs jusqu'à la température finale de stérilisation.

- 8 -

0165152

Les courbes en pointillés tiennent compte de l'échappement du compartiment 1 vers le compartiment 2 et représentent l'allure moyenne réelle des pressions relatives dans les deux compartiments.

Les arômes échappés du compartiment 1 n'ayant pas la possibilité de fuir par les joints étanches 6 et 7 sont donc directement conduits dans le compartiment 2 en imprégnant la préparation qu'ils traversent.

Il est à noter que, dans ce fonctionnement en double enceinte fermée sans communication avec l'extérieur, les pressions internes générées par la dilatation des phases liquides, solides, gazeuses, sous l'action de la température, sont toujours supérieures à la tension de vaporisation. Elles évitent donc les transferts liquides par vaporisation.

UTILISATION DU DISPOSITIF

La préparation noble choisie comme générateur aromatique est enfermée dans le compartiment 1. La bague 3 est mise en place avec interposition d'un joint 7 entre les portées 11 et 31.

La capsule métallique 4 est alors posée sur sa portée 35 en respectant les conditions nécessaires à l'évolution d'une pression suffisante et nécessaire aux transferts aromatiques.

L'étrier de contrainte 5 est ensuite mis en place par l'intermédiaire de la gorge 36 pour maintenir le centre de la capsule 4 en point fixe.

Dans la mesure où la préparation enfermée dans le compartiment 1 nécessite un traitement de stérilisation plus long (cas général des préparations à base de viande), il est alors procédé à une pré-stérilisation de la durée nécessaire dans un autoclave avec une contre-pression ajustée pour éviter tout dégazage.

Le composant déterminé comme receveur aromatique (cas général des légumes) est enfermé dans le compartiment 2.

Les deux compartiments 1 et 2 sont alors réunis par l'intermédiaire de la bague 3 entre les portées 21 et 31 en respectant les conditions paramétriques nécessaires à

l'évolution dans le compartiment 2 d'une pression suffisante et nécessaire aux transferts aromatiques.

Le récipient à deux étages est alors mis en position verticale, compartiment 1 vers le bas, dans un autoclave fonctionnant avec une contre-pression adaptée aux conditions de résistance du dispositif.

La technique habituelle de conduite de l'autoclave (immersion totale des récipients, fermeture, montée en pression, montée en température, palier de stérilisation, refroidissement à l'eau, décompression, ouverture) est totalement applicable à ce nouveau procédé d'élaboration de plats cuisinés en couples.

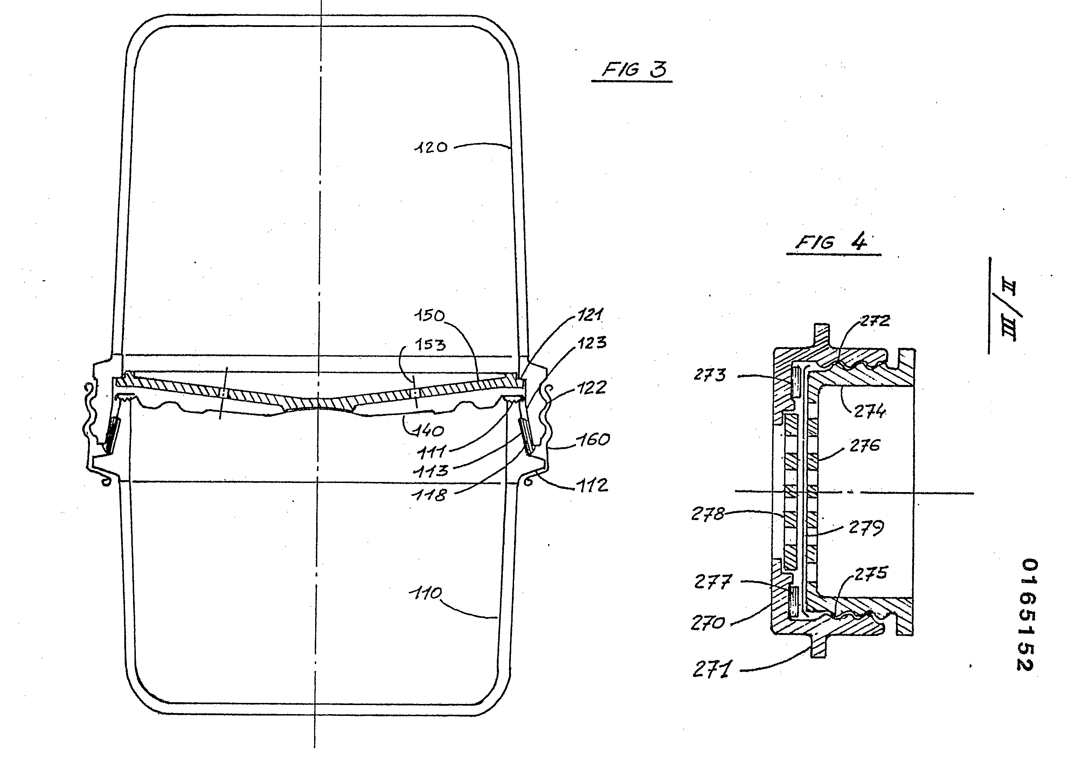

Si l'on se réfère maintenant à la figure 3, on voit un récipient à deux compartiments 110 et 120 qui diffèrent des compartiments 1 et 2 de la figure 1 par le fait qu'ils sont de conception spécifiquement adaptée à l'invention. Ainsi, le compartiment 110 comporte, outre une portée striée 111, un profil externe formant une gorge 113, adaptée à recevoir un joint 118, et une saillie périphérique 112. De son côté, le compartiment 120, comporte, outre un bord interne 123 adapté à venir engager le joint 118 et formant un épaulement 121, un profil externe 122 de vissage.

Une capsule 140, équivalente à la capsule 4 de la figure 1, repose par ses bords sur la portée 111 du compartiment 110. Elle est maintenue point fixe, en son centre, par une coupelle 150 équivalente à l'étrier 5 de la figure 1. La coupelle 150 prend appui sur l'épaulement 121 du compartiment 120. Des perforations 153 sont prévues dans la coupelle 150 pour permettre le passage des arômes et fumets du compartiment 110 au compartiment 120.

Une bague filetée 160, retenue par la saillie périphérique 112 du compartiment 110 est vissée sur le filetage 122 du compartiment 120 pour réunir les deux compartiments ensemble.

Le fonctionnement et l'utilisation du récipient de la figure 3 sont exactement les mêmes que ceux du récipient des figures 1 et 2.

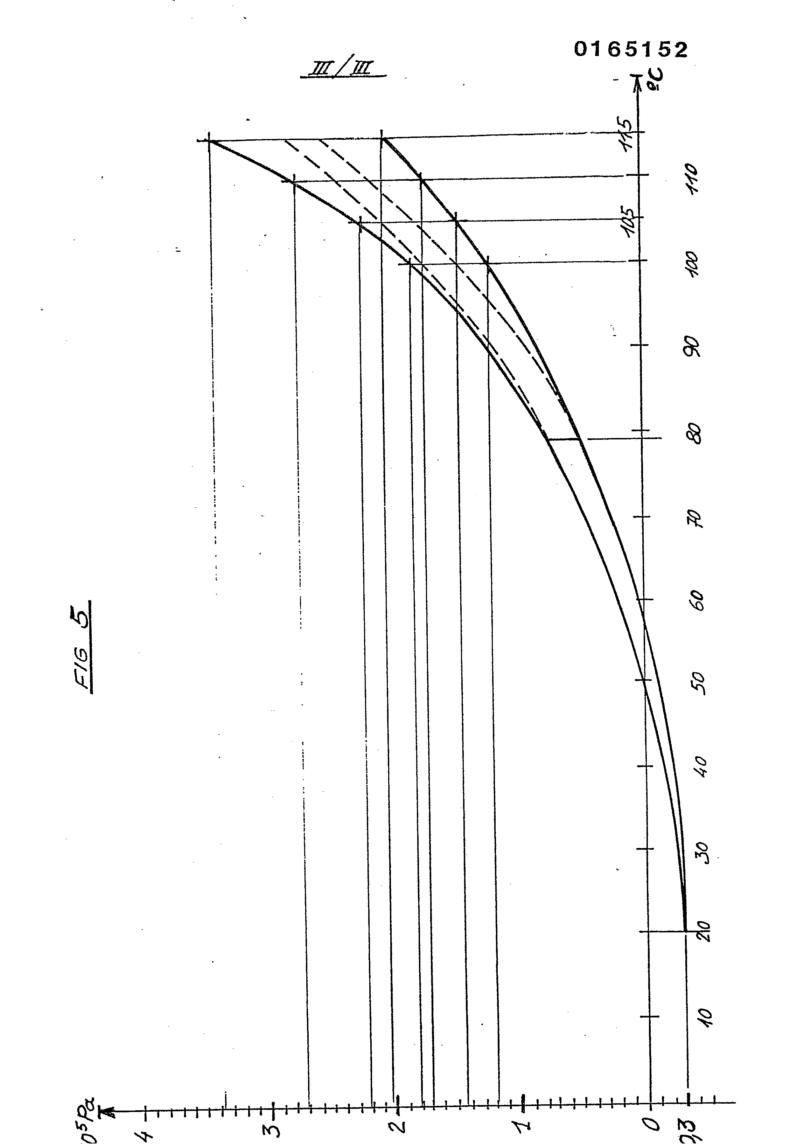

Si l'on en vient à la figure 4, on voit, un dispositif à membrane étanche aux liquides et perméable aux gaz à fixer par thermo-scellage dans la cloison de séparation des compartiments d'une barquette ou de sachets plastiques permettant ainsi de réaliser la migration aromatique des deux préparations séparées.

Plus précisément, l'ensemble est constitué par une coupelle 270 possédant un talon extérieur 271 prévu pour permettre le thermo-scellage dans ladite cloison, un profil intérieur à visser 272 et une portée d'étanchéité 273. Un bouchon 274 possédant un profil extérieur à visser 275 et une extrémité perforée 276 sert à la fixation sur la portée 273 de la coupelle 270 de la membrane polytétrafluoroéthylène 279 ; cette membrane n'ayant pas de résistance mécanique est maintenue sur toute sa surface, d'un côté, par une grille plastique 278 et, de l'autre côté, par l'extrémité perforée 276 du bouchon 274. Un joint 277 assure l'étanchéité entre la grille support 278 et la portée 273 de la coupelle 270.

On comprend qu'après thermo-scellage du bouchon 270 dans la cloison de séparation des compartiments, les liquides ne peuvent pas passer d'un côté à l'autre grâce à l'étanchéité aux liquides réalisée par le joint 277 et la membrane 273, tandis que les arômes et fumets peuvent, eux, passer d'un compartiment à l'autre au travers de ladite membrane.

L'adaptation dudit dispositif à membrane sur des barquettes ou sachets plastiques s'adresse plus précisément à la restauration en raison de sa présentation plus simple et de la possibilité d'effectuer un réchauffage en four microonde.

Bien que l'on puisse également soumettre la barquette plastique à une stérilisation, on aura plus souvent recours à une pasteurisation dans la mesure où il s'agira d'aliments destinés à être consommés assez rapidement.

Il est bien entendu que l'invention n'est pas limitée aux formes d'exécution décrites et représentées.

0165152

Dans tous les cas, l'invention permet la stérilisation simultanée -ou la pasteurisation simultanée (qui peut le plus pouvant le moins)- de préparations cuisinées comportant viandes et garnitures, en maintenant un mijotement séparé des composants de nature différente tout en assurant une migration des arômes d'un composant vers l'autre, cette migration pouvant se faire exclusivement dans un sens déterminé, si on le désire.

**0165152**

## REVENDICATIONS

1- Récipient à compartiments multiples pour le conditionnement et la conservation de produits alimentaires en vue de leur consommation différée, caractérisé en ce qu'il comporte au moins deux compartiments (1, 2 ; 110, 120) hermétiquement isolés du milieu extérieur et isolés l'un de l'autre par des moyens (3, 4 ; 160, 140 ; 279) s'opposant au passage de liquide d'un compartiment à l'autre, mais permettant, au-delà d'un seuil de pression interne prédéterminé, le passage des gaz d'un compartiment à l'autre.

2- Récipient selon la revendication 1, caractérisé en ce que les compartiments sont adaptés à contenir, l'un (1, 110), une première composition alimentaire développant des fumets et des arômes lors d'une opération de stérilisation et, l'autre (2, 120), une seconde composition alimentaire susceptible d'être parfumée par lesdits arômes et/ou par lesdits fumets, grâce à quoi le récipient, utilisé également pour la stérilisation des produits alimentaires qu'il renferme, permet, lors de cette opération, à l'air chargé des fumets et des arômes de la première composition contenue dans le compartiment (1, 110) de passer vers le compartiment (2, 120) contenant la deuxième composition.

3- Récipient selon la revendication 1 ou 2, caractérisé en ce que les compartiments (1, 2 ; 110, 120) sont hermétiquement isolés du milieu extérieur par un dispositif d'obturation commun et amovible (3, 160).

4- Récipient selon l'une quelconque des revendications 1 à 3, caractérisé en ce que les deux compartiments (1, 2 ; 110, 120) sont appliqués ouverture contre ouverture.

5- Récipient selon la revendication 3 ou 4, caractérisé en ce que le dispositif d'obturation commun (3, 160) coopère avec le bord libre de l'ouverture de chacun des deux compartiments (1, 2 ; 110, 120).

6- Récipient selon l'une quelconque des revendications 1 à 5, caractérisé en ce que les moyens (4, 140) permettant le passage des gaz sont des moyens à voie unique.

7- Récipient selon la revendication 6, caractérisé en ce que les moyens permettant le passage à voie unique des fumets et des arômes sont constitués par une capsule (4, 140) reposant sur le bord libre du premier compartiment (1, 110) et maintenue en position par un organe d'appui (5, 105), ladite capsule (4, 140) formant soupape pour l'échappement des fumets et arômes lorsque la pression dans le premier compartiment (1, 110) excède un seuil prédéterminé et ledit organe d'appui laissant libres des passages (153) adaptés à permettre aux fumets et arômes ainsi issus du premier compartiment (1, 110) de pénétrer dans le second compartiment (2, 120).

8- Récipient selon la revendication 7, caractérisé en ce que la capsule (4, 140) est maintenue en position par un appui exercé en son centre par l'organe d'appui (5, 150) et en ce que l'effet de soupape est obtenu par déformation de ladite capsule (4, 140) entraînant le soulèvement de sa périphérie et le décollement d'avec le bord libre du premier compartiment (1, 110).

9- Récipient selon l'une quelconque des revendications 1 à 8, caractérisé en ce que les deux compartiments (1, 2 ; 110, 120) sont en verre.

10- Récipient selon la revendication 1 ou 2, caractérisé en ce que les moyens (279) s'opposant au passage de liquide d'un compartiment à l'autre, mais permettant, au-delà d'un seuil de pression interne prédéterminé, le passage des gaz d'un compartiment à l'autre, sont formés par une membrane en matière plastique inerte vis-à-vis des aliments, perméable aux gaz et imperméable aux liquides.

11- Application du récipient selon l'une quelconque des revendications 1 à 10 au conditionnement, à la stérilisation et à la conservation de préparations cuisinées de longue conservation comportant plusieurs composants de nature différente dont le conditionnement, la stérilisation et la conservation dans un seul contenant altéreraient les qualités gustatives et la consistance desdits composants.

12- Procédé d'élaboration de préparations cuisinées de longue conservation à partir du récipient selon l'une quelconque des revendications 1 à 10, caractérisé par :

- un conditionnement séparé des spécialités viandes ou poissons et des garnitures,

- une stérilisation séparée de ces mêmes composants,

- un transfert des arômes et des fumets de la spécialité dans les garnitures, et

- une conservation séparée des spécialités et garnitures jusqu'au moment de l'utilisation.

FIG 1

FIG 2

I / III

0165152

FIG 3

FIG 4

II/III

0165152

*FIG 5*

III / III

0165152

**0165152**

Office européen
des brevets

**RAPPORT DE RECHERCHE EUROPEENNE**

Numéro de la demande

EP  85 40 1006

| | | | |
|---|---|---|---|
| **DOCUMENTS CONSIDERES COMME PERTINENTS** | | | |
| Catégorie | Citation du document avec indication, en cas de besoin, des parties pertinentes | Revendication concernée | CLASSEMENT DE LA DEMANDE (Int. Cl.⁴) |
| X | US-A-4 238 996  (OKUYAMA) <br> * Colonne 3, lignes 52-67; figure 1 * | 1,2,6 | A 47 J  27/05 <br> A 47 J  27/084 <br> A 23 L  3/10 |
| | --- | | |
| A | US-A-1 408 356  (JONES) <br><br> * En entier * | 1,6,7, 8 | |
| | --- | | |
| A | US-A-2 688 322  (KRAMER) <br> * Colonne 7, ligne 63 - colonne 8, ligne 66; figure 2 * | 1,2 | |
| | --- | | |
| A | CH-A- 441 662  (CALLIES) <br> * Figure 5 * | 4 | |
| | ----- | | |

**DOMAINES TECHNIQUES RECHERCHES (Int. Cl.⁴)**

A 47 J
A 23 L
B 65 D

Le présent rapport de recherche a été établi pour toutes les revendications

| Lieu de la recherche | Date d'achèvement de la recherche | Examinateur |
|---|---|---|
| LA HAYE | 03-09-1985 | SCHARTZ J. |